Europäisches Patentamt

European Patent Office

Office européen des brevets

(11) Veröffentlichungsnummer: **0 345 490**
**A2**

(12) **EUROPÄISCHE PATENTANMELDUNG**

(21) Anmeldenummer: **89108712.4**

(22) Anmeldetag: **16.05.89**

(51) Int. Cl.4: **C07F 9/09 , C11D 3/36**

(30) Priorität: **07.06.88 DE 3819374**

(43) Veröffentlichungstag der Anmeldung:
**13.12.89 Patentblatt 89/50**

(84) Benannte Vertragsstaaten:
**AT BE CH DE ES FR GB LI NL SE**

(71) Anmelder: **HOECHST AKTIENGESELLSCHAFT**
**Postfach 80 03 20**
**D-6230 Frankfurt am Main 80(DE)**

(72) Erfinder: **Westermann, Lothar**
**Ludwigstrasse 8**
**D 5000 Köln(DE)**
Erfinder: **Dany, Franz-Josef, Dr.**
**Heddinghovener-Strasse 47**
**D 5042 Erftstadt(DE)**
Erfinder: **Ulrich, Hannsjörg, Dr.**
**von-Bodelschwingh-Weg 47**
**D 5042 Erftstadt(DE)**
Erfinder: **Klose, Werner, Dr.**
**Grachtstrasse 14**
**D 5042 Erftstadt(DE)**
Erfinder: **Gohla, Werner**
**Rathausstrasse 17**
**D 5216 Niederkassel(DE)**

(54) **Phosphorsäurepartialestergemische, Verfahren zu deren Herstellung, deren Verwendung sowie Wasch- und Reinigungsmittel, die solche Gemische enthalten.**

(57) Vorliegende Erfindung betrifft Phosphorsäurepartialestergemische, erhältlich entweder durch Umsetzung von je 1 Mol $P_4O_{10}$ mit 6 Mol Alkyloligoglykolether mit 8 bis 15 C-Atomen in der Alkylgruppe, wobei diese Alkyloligoglykolether 2 bis 12 Ethylenoxid- und 2 bis 15 Propylenoxid-Einheiten pro Molekül aufweisen oder durch Umsetzung von je 1 Mol $P_4O_{10}$ mit einem Gemisch, bestehend aus 2 Mol der genannten Alkyloligoglykolether und 4/n Mol eines Alkanpolyols, welches 2 bis 12 C-Atome und 2 bis 6 Hydroxylgruppen aufweist, wobei n die Anzahl der Hydroxylgruppen im Alkanpolyolmolekül bedeutet.

Weitere Gegenstände dieser Erfindung sind Verfahren zur Herstellung dieser Estergemische sowie deren Verwendung und ferner Wasch- und Reinigungsmittel, die solche Gemische enthalten.

EP 0 345 490 A2

**Phosphorsäurepartialestergemische, Verfahren zu deren Herstellung, deren Verwendung sowie Wasch- und Reinigungsmittel, die solche Gemische enthalten**

Es ist bekannt (US-A-4 141 938), Gemische saurer Orthophosphorsäureester zu erhalten, indem man Phosphorpentoxid mit einem Gemisch, bestehend aus einem einwertigen Alkohol sowie einem Alkanpolyol mit 2 bis 12 C-Atomen und 2 bis 6 Hydroxylgruppen, umsetzt, unter Einhaltung eines Molverhältnisses von Tetraphosphordekaoxid zu einwertigem Alkohol zu Alkanpolyol von 1 : 2 : 4/n, wobei n die Anzahl der Hydroxylgruppen im Alkanpolyolmolekül bedeutet.

Nach einer bevorzugten Ausführungsform dieses bekannten Verfahrens kann als einwertiger Alkohol unter anderem ein aliphatischer Alkohol mit 1 bis 22 C-Atomen oder das Umsetzungsprodukt eines solchen Alkohols mit 2 bis 20 Molen Ethylenoxid eingesetzt werden.

Vorgeschlagen wurde in der genannten U.S. Patentschrift auch, die darin beschriebenen Phosphorsäureestergemische beispielsweise in Wasch- und Reinigungsmitteln als schaumregulierende Additive zu verwenden.

Überraschenderweise wurde nun gefunden, daß eine neue, bestimmte Gruppe von Phosphorsäureestergemischen andere vorteilhafte physikalische Eigenschaften aufweist, die sie als Zusätze für Wasch- und Reinigungsmittel besonders geeignet macht.

Diese neuen Estergemische unterscheiden sich von den bekannten Gemischen in chemischer Hinsicht unter anderem dadurch, daß sie Ester nicht nur von Umsetzungsprodukten von Alkoholen mit Ethylenoxid sondern auch mit Propylenoxid enthalten.

Im einzelnen besteht die vorliegende Erfindung in Phosphorsäurepartialestergemischen, erhältlich entweder durch Umsetzung von je 1 Mol $P_4O_{10}$ mit 6 Mol Alkyloligoglykolether mit 8 bis 15 C-Atomen in der Alkylgruppe, wobei diese Alkyloligoglykolether 2 bis 12 Ethylenoxid- und 2 bis 15 Propylenoxid-Einheiten pro Molekül aufweisen, oder durch Umsetzung von je 1 Mol $P_4O_{10}$ mit einem Gemisch, bestehend aus 2 Mol der genannten Alkyloligoglykolether und 4/n Mol eines Alkanpolyols, welches 2 bis 12 C-Atome und 2 bis 6 Hydroxylgruppen aufweist, wobei n die Anzahl der Hydroxylgruppen im Alkanpolyolmolekül bedeutet. Dabei werden die Ausgangsprodukte bei einer Temperatur zwischen 0 und 120°C unter Ausschluß von Feuchtigkeit in Gegenwart eines inerten Gases 1 bis 6 Stunden gemischt oder geknetet und nach Beendigung der Reaktion das erhaltene Umsetzungsprodukt abgekühlt.

Die Erfindung umfaßt auch ein Verfahren zur Herstellung eines Phosphorsäurepartialestergemisches. Dieses Verfahren ist dadurch gekennzeichnet, daß man entweder je 1 Mol $P_4O_{10}$ mit 6 Mol Alkyloligoglyko-lether mit 8 bis 15 C-Atomen in der Alkylgruppe, wobei diese Alkyloligoglykolether 2 bis 12 Ethylenoxid- und 2 bis 15 Propylenoxid-Einheiten pro Molekül aufweisen, oder daß man je 1 Mol $P_4O_{10}$ mit einem Gemisch, bestehend aus 2 Mol der genannten Alkyloligoglykolether und 4/n Mol eines Alkanpolyols, welches 2 bis 12 C-Atome und 2 bis 6 Hydroxylgruppen aufweist, wobei n die Anzahl der Hydroxylgruppen im Alkanpolyolmolekül bedeutet, bei einer Temperatur zwischen 0 und 120°C unter Ausschluß von Feuchtigkeit in Gegenwart eines inerten Gases 1 bis 6 Stunden lang mischt oder knetet und nach Beendigung der Reaktion das erhaltene Umsetzungsprodukt abkühlen läßt.

Vorteilhafte Ausgestaltungen dieses Verfahrens bestehen darin, daß man
a) Alkyloligoglykolether mit 2 bis 8 Ethylenoxid-Einheiten pro Molekül einsetzt;
b) Alkyloligoglykolether mit 2 bis 6 Propylenoxid-Einheiten pro Molekül einsetzt und
c) als Alkanpolyol 1,2-Ethandiol oder 1,2-Propandiol einsetzt.

Weitere Gegenstände der Erfindung sind sowohl die Verwendung der erfindungsgemäßen Phosphorsäurepartialestergemische als Suspendierungsmittel in Wasch- und Reinigungsmitteln als auch Wasch- und Reinigungsmittel, welche die erfindungsgemäßen Phosphorsäurepartialestergemische als Suspendierungsmittel enthalten und zwar zusätzlich zu den üblichen, bekannten Wasch- und Reinigungsmittelkomponenten wie z.B. Tenside der verschiedensten Art, Gerüstsubstanzen wie Polyphosphate oder Silikate und Hilfs- und Zusatzstoffe wie Sulfate, Bleichmittel und Zellulosederivate.

Textilwaschmittel und Reinigungsmittel, insbesondere solche für harte Oberflächen, müssen neben einer guten Reinigungswirkung auch das notwendige Schmutztragevermögen besitzen, d.h. den abgelösten Schmutz suspendieren, damit er in der Schwebe gehalten wird. Sogenannte Schmutzträger, die eine Redeposition der abgelösten Schmutzteilchen verhindern, sind beispielsweise Polymerphosphate, Celluloseether, Polycarboxylate und spezielle Tenside.

Die bekannten Dispergatoren besitzen jedoch den Nachteil, daß sie nur in engen pH-Bereichen wirksam sind. So suspendieren z.B. Polymerphosphate in saurer Lösung nicht, da sie unter diesen Bedingungen hydrolytisch gespalten werden. In neutralen und alkalischen Lösungen treten zudem bei den einzelnen Phosphat-Typen, beispielsweise Pentanatriumtriphosphat und Tetranatriumdiphosphat, noch Unterschiede im Suspendierungsvermögen auf, die ebenfalls unter anderem auf Hydrolysegleichgewichte zurückgeführt werden können. Polymerphosphate haben ihren optimalen Wirkungsbereich bei pH 10 und einer Dosierung von 1 bis 2 g/l.

Polycarboxylate haben im sauren Medium eine stark verminderte Wirkung. Im alkalischen und neutralen Bereich läßt je nach Art des chemischen Charakters ihre supendierende Wirkung gegenüber Feststoffen in Abhängigkeit von der Zeit nach.

Wasserlösliche Celluloseether, beispielsweise Methylhydroxyethylcellulose, Carboxymethylcellulose und Hydroxyethylcellulose, sind als Suspendierungsmittel nur im schwach sauren und schwach alkalischen Bereich einsetzbar. Starke Säuren und Alkalien setzen in Zeitabhängigkeit die Wirkung stark herab.

Auch Tenside sind in ihrem Suspendierungsverhalten pH-abhängig. Es war daher nicht vorhersehbar, daß die erfindungsgemäßen Phosphorsäurepartialester sich besonders durch ein ausgeprägtes Suspendierungsvermögen auszeichnen und das unabhängig vom pH-Wert im pH-Bereich von etwa 1,0 bis 14. Während vergleichsweise die sauren Orthophosphorsäureester von Fettalkohol-Oxethylaten nur ungenügende dispergierende Eingenschaften aufweisen, zeigen solche Phosphorsäurepartialester, bei denen als einwertige Alkohole die Umsetzungsprodukte aliphatischer Alkohole mit 2 bis 12 Mol Ethylenoxid und 2 bis 15 Mol Propylenoxid eingesetzt werden, überraschenderweise hervorragende Suspendierungseigenschaften. Daraus ergibt sich ein deutlicher anwendungstechnischer Vorteil.

Durch die erfindungsgemäßen Mittel kann aber nicht nur abgelöster Schmutz, sondern auch festes, fein verteiltes Material in Schwebe gehalten werden. So können beispielsweise pulverförmige Abrasivstoffe auch in solchen flüssigen Reinigungsmitteln suspendiert werden, die keine "Bingham-Plastic"-Eigenschaften aufweisen. Reinigungsmittel mit "Bingham-Plastic"-Eigenschaften besitzen einen hohen Fließpunkt, wodurch eingebrachte Pigmente in Suspension gehalten werden. Bei diesen Reinigungsmitteln mit "Bingham-Plastic"-Eigenschaften ist deren Rezeptierung und Herstellung jedoch sehr schwierig und damit ein entscheidender Nachteil, weil selbst geringe Mengen hydrotroper Agenzien in derartigen Zubereitungen der erforderlichen hohen Fließpunkt herabsetzen und damit ein Absetzen, beispielsweise von Abrasivstoffen, in den Reinigungsmitteln bewirken. Häufig können diese abgesetzten Pigmente nicht mehr ausreichend durch Schütteln des Reinigungsmittel-Gebindes in Suspension gebracht werden. Damit sind diese Produkte anwendungstechnisch unbrauchbar.

Im Gegensatz dazu bleibt bei den erfindungsgemäßen Produkten die Suspendierungswirkung auch in Gegenwart verschiedenster Wasch- und Reinigungsmittel-Komponenten, insbesondere auch hydrotroper Agenzien, über den gesamten pH-Bereich fast unabhängig von der Zeit erhalten.

Die folgenden Beispiele sollen der näheren Erläuterung der Erfindung dienen.

Beispiel 1

Zu einer Reinigungsmittelformulierung bestehend aus:

| 5 | Gew.-% | Phosphorsäure, 85 %ig |
|---|---|---|
| 5 | Gew.-% | Citronensäure-monohydrat |
| 3 | Gew.-% | Cocosfettaminpolyglykolether · 8-10 Mol Ethylenoxid |
| 3 | Gew.-% | Fettalkoholpolyglykolether · 6-8 Mol Ethylenoxid |
| 79 | Gew.-% | Wasser |

wurden zum einen (Beispiel 1a) 5 Gew.-% eines erfindungsgemäßen Phosphorsäurepartialestergemisches von $C_{12}$- bis $C_{15}$-Alkoholen mit 8 Molen Ethylenoxid (EO) und 4 Molen Propylenoxid (PO) und zum anderen (Vergleichsbeispiel 1b) 5 Gew.-% Phosphorsäuremono- und -diestergemisches von $C_{10}$-Alkohol mit 3 Molen EO zugesetzt und das Suspendierungsvermögen dieser beiden Reinigungsmittel auf jeweils zwei verschiedenen Wegen bestimmt:

I: 20 g Eisen-III-oxid ($Fe_2O_3$) der mittleren Korngröße ~ 4 mm wurden in jeweils einem Liter der Reinigerlösung in Konzentrationen von 1 bis 100 g Reiniger/l Wasser von 14°d mit Hilfe eines Sägezahnrührers suspendiert und in einen graduierten 1 l-Meßzylinder (Höhe 42 cm, ∅ 6 cm) eingefüllt. Nach 4 Stunden Standzeit wurde die Sedimentation des $Fe_2O_3$ visuell begutachtet. Dabei wurde zwischen schwacher, mittlerer und starker Trübung der Wäßrigen Phase unterschieden. Sofern sich Schichten ausgebildet hatten, wurde anschließend mit einer Pipette jeweils aus einer definierten Höhe der Oberschicht und Unterschicht eine Probe entnommen und daran photometrisch die Lichtdurchlässigkeit bestimmt.

II. In einem 250 ml Glasbecher wurden 100 ml 0,5 Gew.-%ige Reinigerlösung (hergestellt mit Wasser von 23° d) vorgelegt und 0,5 Gew.-% Eisen-III-oxid zugegeben. Suspendiert wurde 5 min bei 2000 UpM mit einem Sägezahnrührer von 40 mm Scheibendurchmesser. 30 ml der Suspension wurden in einen PVC-Becher gegeben. Danach wurde ein Filterpapierstreifen (20 × 185 mm) so eingehängt, daß er 1 mm über dem Boden des Bechers endete. Das Filterpapier war mittel- bis weitporig. Wenn der Pigmentschmutz mit dem Wasser ähnlich wie bei der Papierchromatographie hochsteigt und nicht im unteren Teil des Filterstreifens festgehalten wird, bedeutet dies eine gute Pigmentsuspendierung.

Die Bewertung der Laufhöhe im Filterstreifen erfolgt in 4 Stufen:
sehr gut (> 80 mm), gut (50 - 80 mm), mäßig (25 - 50 mm) und
schlecht (< 25 mm)

In der nachfolgenden Tabelle sind die Lichtdurchlässigkeitswerte angegeben, welche sich nach dem Meßverfahren I bei Verwendung eines Reinigers 1a im Vergleich zu einer Verwendung eines Reinigers 1b ergaben.

| Lichtdurchlässigkeit in % bei 850 ml und 4 Stunden Standzeit | | | | | | | |
|---|---|---|---|---|---|---|---|
| Dosierung in 1 l Wasser | | | | | | | |
| Reiniger | 1 g | 2 g | 5 g | 10 g | 20 g | 50 g | 100 g |
| Reiniger 1a | 92,2 | 90,0 | 0 | 0 | 0 | 0 | 0 |
| Reiniger 1b | 98,0 | 98,0 | 98,0 | 98,0 | 98,0 | 98,0 | 98,0 |

Das nach dem Verfahren II ermittelte Suspendierungsvermögen des Reinigers 1a konnte als "sehr gut" (Laufhöhe > 80 mm) eingestuft werden, während der Reiniger 1b ungenügende Suspendierungseigenschaften (Laufhöhe < 25 mm) aufwies und nur mit "schlecht" beurteilt werden konnte.


Beispiel 2

In einem neutralen Reinigungsmittel (pH 7) folgender Zusammensetzung wurden zwei erfindungsgemäße Phosphorsäurepartialester als Suspendierungsmittel verwendet:

| Reiniger 2a: | | |
|---|---|---|
| 20,0 | Gew.-% | Pentakaliumtriphosphat |
| 2,0 | Gew.-% | 2-Butoxyethanol |
| 2,0 | Gew.-% | erfindungsgemäßer Phosphorsäureester von $C_{12}$-$C_{15}$-Alkohol mit 5 Mol Ethylenoxid und 4 Mol Propylenoxid |
| 2,0 | Gew.-% | erfindungsgemäßer Phosphorsäureester von $C_{12}$-$C_{15}$-Alkohol mit 7 Mol Ethylenoxid und 3 Mol Propylenoxid im Gemisch mit 1,2- Propandiol |
| 0,1 | Gew.-% | Fluortensid |
| 16,0 | Gew.-% | Natriumcumolsulfonat, 40 %ig |
| 57,9 | Gew.-% | Wasser |

Das Suspendierungsvermögen wurde gemäß dem Verfahren I, wie in Beispiel 1 beschrieben, durch Bestimmung der Lichtdurchlässigkeit festgestellt und verglichen mit der Lichtdurchlässigkeit eines entsprechenden Reinigers 2b, bei dem die erfindungsgemäßen Phosphorsäurepartialester durch eine Menge Wasser von 4 Gew.-% ersetzt wurden.

| Lichtdurchlässigkeit in % bei 850 ml und 4 Stunden Standzeit | | | | | | | |
|---|---|---|---|---|---|---|---|
| Reiniger-Dosierung in 1 l Wasser | | | | | | | |
| Reiniger | 1 g | 2 g | 5 g | 10 g | 20 g | 50 g | 100 g |
| Reiniger 2a | 72,4 | 26,5 | 0 | 0 | 28,2 | 98,0 | 98,0 |
| Reiniger 2b | 98,0 | 85,3 | 5,7 | 21,1 | 78,5 | 98,0 | 98,0 |

Suspendierungsvermögen nach Verfahren II aus Beispiel 1: Die Rezeptur mit Reiniger 2a nat ein gutes Suspendierungsvermögen (Laufhöhe 60 mm).

Das Suspendierungsverhalten des Reinigers 2b ist nicht ausreichend (Laufhöhe < 25 mm = "schlecht").

Beispiel 3

Mit 2 Gew.-% eines Phosphorsäuremono- und -diestergemisches,erfindungsgemäß hergestellt aus einem Fettalkoholalkoxylat mit etwa 8 Mol Ethylenoxid und 4 Mol Propylenoxid, 1,2-Propandiol und $P_4O_{10}$ im Molverhältnis 2 : 2 : 1, anstelle von 2 Gew.-% des angegebenen Wassergehaltes wurde die nachfolgende Formulierung 3b zu einem Reiniger 3a umformuliert und das Supendierungsvermögen nach Verfahren II, wie im Beispiel 1 beschrieben, im Vergleich zur Formulierung 3b bestimmt:

| 3 | Gew.-% | Dodecylbenzolsulfonat, Na-Salz |
|---|---|---|
| 3 | Gew.-% | $C_{13}$-Oxoalkohol mit 8 Mol Ethylenoxid |
| 5 | Gew.-% | 2-Butoxyethanol |
| 4 | Gew.-% | Natriumhydroxid |
| 4 | Gew.-% | Natriumcumolsulfonat |
| 79 | Gew.-% | Wasser |
| Der pH-Wert der Rezeptur beträgt etwa 13. | | |

Die Formulierung 3a mit 2 Gew.-% des erfindungsgemäßen Phosphorsäurepartialesters ergab eine Laufhöhe von > 80 mm, d.h. das Suspendierungsvermögen dieses Phosphorsäurepartialesters muß mit "sehr gut" beurteilt werden, während die Formulierung 3b ohne den Phosphorsäurepartialester nur eine Laufhöhe von 30 mm erreicht ("mäßig").

Beispiel 4

Ein pulverförmiges, phosphathaltiges Textilwaschmittel gemäß unten genannter Formulierung wurde einmal ohne und einmal mit Zusatz von 3 Gew.-% eines erfindungsgemäßen Phosphorsäuremono- und -diestergemisches auf Basis eines Fettalkoholalkoxylates mit etwa 6 Mol Ethylenoxid und 4 Mol Propylenoxid in einem Sprühnebelmischer zu einem Waschmittel 4b und einem Waschmittel 4a hergestellt.

Mit den so hergestellten Waschmitteln wurden in einer üblichen Haushaltswaschmaschine (Typ Miele W 760) Waschversuche unter folgenden Bedingungen durchgeführt:

| Waschtemperatur: | 93 °C |
| Wasserhärte: | 18 °d |
| Zweilaugenverfahren: | |
| Dosierung (Vorwäsche): | 150 g |
| Dosierung (Klarwäsche): | 150 g |
| Anzahl der Waschzyklen: | 25 |
| Testgewebe: | EMPA-Baumwolle |
| Beladung: | 3,75 kg durchschnittlich verschmutzte Haushaltswäsche |

Die nach diesen Waschversuchen resultierende Gewebeasche ist als Maß für das Suspendiervermögen des Waschmittels zu werten. Die Gewebeasche wurde gemäß dem in der Fachwelt üblichen Verfahren durch Verglühen (12 Std. bei 900 °C) eines aliquoten Testgewebestreifens ermittelt.

Den hier geprüften Waschmitteln lag folgende Rezeptur zugrunde:

4a) mit 3 Gew.-% des Phosphorsäurepartialesters

4b) ohne Phosphorsäurepartialester

| 21,5 | Gew.-% | Pentanatriumtriphosphat |
| 7,0 | Gew.-% | Alkylbenzolsulfonat |
| 4,0 | Gew.-% | $C_{13}/C_{14}$-Oxoalkohol mit 7 Mol Ethylenoxid |
| 3,5 | Gew.-% | Seife |
| 1,5 | Gew.-% | Carboxymethylcellulose |
| 0,2 | Gew.-% | Ethylendiamintetraacetat, Na-Salz |
| 0,20 | Gew.-% | optischer Aufheller |
| 0,25 | Gew.-% | Enzyme |
| 20,00 | Gew.-% | Natriumperborat-tetrahydrat |
| 5,00 | Gew.-% | Natriumdisilikat |
| 2,00 | Gew.-% | Magnesiumsilikat |
| ad 100,00 | Gew.-% | Natriumsulfat |

Es wurden folgende Werte für die Gewebeasche gefunden:

| 4a) | mit Phosphorsäurepartialester | : 0,89 | Gew.-% |
| 4b) | ohne Phosphorsäurepartialester | : 3,59 | Gew.-% |

Diese Ergebnisse sind evident für die guten Suspendierungseigenschaften eines erfindungsgemäßen Esters. Ein Gewebeaschegehalt < 1 Gew.-% entspricht dem höchsten waschtechnischen Standard.

## Beispiel 5

Einem pulverförmigen, phosphatfreien Textilwaschmittel nachfolgender Zusammensetzung wurden 3 Gew.-% Phosphorsäurepartialester gemäß Beispiel 4 zugemischt und die Gewebeasche unter den gleichen Versuchsbedingungen wie in Beispiel 4 beschrieben ermittelt.

Rezeptur 5a) ohne, Rezeptur 5b) mit 3 Gew.-% des Phosphorsäurepartialesters anstelle eines entsprechenden Teils Natriumsulfat.

| | | |
|---|---|---|
| 21,50 | Gew.-% | Natriumaluminiumsilikat |
| 10,00 | Gew.-% | Natriumcarbonat |
| 7,00 | Gew.-% | Alkylbenzolsulfonat |
| 4,00 | Gew.-% | $C_{13}/C_{14}$-Oxoalkohol mit 7 Mol Ethylenoxid |
| 3,50 | Gew.-% | Seife |
| 1,50 | Gew.-% | Carboxymethylcellulose |
| 0,20 | Gew.-% | Ethylendiamintetraacetat, Na-Salz |
| 0,25 | Gew.-% | Enzyme |
| 20,00 | Gew.-% | Natriumperborat-tetrahydrat |
| 5,00 | Gew.-% | Natriumdisilikat |
| 2,00 | Gew.-% | Magnesiumsilikat |
| ad 100,00 | Gew.-% | Natriumsulfat |

Folgende Werte für die Gewebeasche wurden ermittelt:

| | | | | |
|---|---|---|---|---|
| Rezeptur 5a) | ohne Phosphorsäurepartialester | : | 3,84 | Gew.-% |
| Rezeptur 5b) | mit Phosphorsäurepartialester | : | 1,05 | Gew.-% |

Auch hier zeigt sich die eindeutige Überlegenheit der Formulierung, welche einen erfindungsgemäßen Phosphorsäurepartialester enthält.

## Beispiel 6

Von einer flüssigen Vollwaschmittelformulierung mit 3 Gew.-% des erfindungsgemäßen Phosphorsäurepartialesters gemäß Beispiel 4 wurden unter den im gleichen Beispiel beschriebenen Versuchsbedingungen die Werte für die Gewebeasche ermittelt.

Rezeptur 6a) ohne, Rezeptur 6b) mit 3 Gew.-% Phosphorsäurepartialester anstelle einer entsprechenden Menge Wasser.

| | | |
|---|---|---|
| 23,80 | Gew.-% | Pentanatriumtriphosphat |
| 6,40 | Gew.-% | Natriumdodecylbenzolsulfonat |
| 2,00 | Gew.-% | $C_{12}$-Oxoalkohol mit 7 Mol Ethylenoxid |
| 0,80 | Gew.-% | Diethanolamin |
| 5,10 | Gew.-% | Glycerin |
| 1,10 | Gew.-% | Natriumtoluolsulfonat |
| 1,50 | Gew.-% | Natriumdisilikat |
| 1,20 | Gew.-% | Natriumsulfat |
| 0,35 | Gew.-% | Ethylendiamintetraacetat, Na-Salz |
| ad 100,00 | Gew.-% | Wasser |

Es wurden folgende Werte für die Gewebeasche gefunden:

| | | |
|---|---|---|
| Rezeptur 6a) ohne Phosphorsäurepartialester | : 4,01 | Gew.-% |
| Rezeptur 6b) mit Phosphorsäurepartialester | : 0,77 | Gew.-% |

Ebenfalls wird in dieser Formulierung 6b) das Supendierungsverhalten des Waschmittels durch den Zusatz eines erfindungsgemäßen Phosphorsäurepartialesters entscheidend verbessert.

## Beispiel 7

Von einem granulatförmigen phosphatfreien Geschirreinigungsmittel für Haushaltsgeschirrspülmaschinen gemäß der unten genannten Formulierung (7b) mit einem Zusatz von 2 Gew.-% eines erfindungsgemä-

7

ßen Phosphorsäurepartialesters nach Beispiel 4 (Formulierung 7a) wurde das Suspendierungsvermögen nach Verfahren II aus Beispiel 1 und außerdem die Reinigungswirkung nach DIN-Vornorm 50275, Teil 1, in einer handelsüblichen Haushaltsgeschirrspülmaschine bei 60°C im Klarspülgang im Vergleich mit der Formulierung 7b bestimmt:

| 50,00 | Gew.-% | eines kristallinen Alkalischichtsilikates gemäß DE-A-36 27 773 |
| 40,00 | Gew.-% | Natriummetasilikat, wasserfrei |
| 2,25 | Gew.-% | Natriumdichlorisocyanurat · 2 $H_2O$ |
| ad 100,00 | Gew.-% | ggfs. Entschäumungsmittel, Parfüm, Farbstoff und/oder Natriumsulfat |

| pH-Wert in der Spülflotte der Haushaltsgeschirrspülmaschine: 11,8 |
| --- |

Die Bestimmung der Supendierungswirkung der Formulierung 7a ergab eine Laufhöhe von > 80 mm, während die Formulierung 7b (ohne Phosphorsäurepartialester) eine Laufhöhe von < 25 mm aufwies, d.h. das Suspendierungsvermögen der Rezeptur mit Phosphorsäurepartialester muß mit "sehr gut", die Formulierung ohne Zusatz von Phosphorsäurepartialester mit "schlecht" beurteilt werden.

Diese entscheidende Verbesserung des Suspendierungsverhaltens durch die erfindungsgemäßen Phosphorsäurepartialester wird in einem nach DIN-Vornorm 50275, Teil 1, vorgenommenen Spülversuch mit der oben angegebenen Rezeptur in einer handelsüblichen Spülmaschine bestätigt.

Es wurde für die Formulierung 7a eine Reinigungswirkung von 90 % (Reinigungsindex 4,5) ermittelt, während die Formulierung 7b (ohne Phosphorsäurepartialester) nur 78 % Reinigungswirkung (Reinigungsindex 3,9) erreichte.

**Ansprüche**

1. Phosphorsäurepartialestergemisch, erhältlich entweder durch Umsetzung von je 1 Mol $P_4O_{10}$ mit 6 Mol Alkyloligoglykolether mit 8 bis 15 C-Atomen in der Alkylgruppe, wobei diese Alkyloligoglykolether 2 bis 12 Ethylenoxid-und 2 bis 15 Propylenoxid-Einheiten pro Molekül aufweisen,oder durch Umsetzung von je 1 Mol $P_4O_{10}$ mit einem Gemisch, bestehend aus 2 Mol der genannten Alkyloligoglykolether und 4/n Mol eines Alkanpolyols, welches 2 bis 12 C-Atome und 2 bis 6 Hydroxylgruppen aufweist -wobei n die Anzahl der Hydroxylgruppen im Alkanpolyolmolekül bedeutet - indem man die Ausgangsprodukte bei einer Temperatur zwischen 0 und 120°C unter Ausschluß von Feuchtigkeit in Gegenwart eines inerten Gases 1 bis 6 Stunden mischt oder knetet und nach Beendigung der Reaktion das erhaltene Umsetzungsprodukt abkühlen läßt.

2. Verfahren zur Herstellung eines Phosphorsäurepartialestergemisches, dadurch gekennzeichnet, daß man entweder je 1 Mol $P_4O_{10}$ mit 6 Mol Alkyloligoglykolether mit 8 bis 15 C-Atomen in der Alkylgruppe, wobei diese Alkyloligoglykolether 2 bis 12 Ethylenoxid- und 2 bis 15 Propylenoxid-Einheiten pro Molekül aufweisen, oder je 1 Mol $P_4O_{10}$ mit einem Gemisch, bestehend aus 2 Mol der genannten Alkyloligoglykolether und 4/n Mol eines Alkanpolyols, welches 2 bis 12 C-Atome und 2 bis 6 Hydroxylgruppen aufweist, wobei n die Anzahl der Hydroxylgruppen im Alkanpolyolmolekül bedeutet, bei einer Temperatur zwi schen 0 und 120°C unter Ausschluß von Feuchtigkeit in Gegenwart eines inerten Gases 1 bis 6 Stunden lang mischt oder knetet und nach Beendigung der Reaktion das erhaltene Umsetzungsprodukt abkühlen läßt.

3. Verfahren nach Anspruch 2, dadurch gekennzeichnet, daß man Alkyloligoglykolether mit 2 bis 8 Ethylenoxid-Einheiten pro Molekül einsetzt.

4. Verfahren nach Anspruch 2 oder 3, dadurch gekennzeichnet, daß man Alkyloligoglykolether mit 2 bis 6 Propylenoxid-Einheiten pro Molekül einsetzt.

5. Verfahren nach mindestens einem der Ansprüche 2 bis 4, dadurch gekennzeichnet, daß man als Alkanpolyol 1,2-Ethandiol oder 1,2-Propandiol einsetzt.

6. Verwendung der Phosphorsäurepartialestergemische gemäß Anspruch 1 als Suspendierungsmittel in Wasch- und Reinigungsmitteln.

7. Wasch- und Reinigungsmittel, dadurch gekennzeichnet, daß sie Phosphorsäurepartialestergemische gemäß Anspruch 1 als Suspendierungsmittel enthalten.